Europäisches Patentamt

European Patent Office

Office européen des brevets

(19)

(11) EP 0 703 253 B1

(12) **EUROPEAN PATENT SPECIFICATION**

(45) Date of publication and mention
of the grant of the patent:
**11.11.1998 Bulletin 1998/46**

(51) Int Cl.$^6$: **C08F 297/08**, C08L 53/00

(21) Application number: **95306721.2**

(22) Date of filing: **22.09.1995**

(54) **Olefinic block copolymer and production process thereof**

Olefinisch Blockcopolymer und Verfahren zu seiner Herstellung

Copolymère bloc oléfinique et son procédé de préparation

(84) Designated Contracting States:
**DE FR GB IT**

(30) Priority: **22.09.1994 JP 228040/94**

(43) Date of publication of application:
**27.03.1996 Bulletin 1996/13**

(73) Proprietor: **RESEARCH DEVELOPMENT CORPORATION OF JAPAN**
**Kawaguchi-shi, Saitama-ken 332 (JP)**

(72) Inventor: **Terano, Minoru**
**Nomi-gun, Ishikawa-ken (JP)**

(74) Representative: **Woods, Geoffrey Corlett et al**
**J.A. KEMP & CO.**
**14 South Square**
**Gray's Inn**
**London WC1R 5LX (GB)**

(56) References cited:
EP-A- 0 405 201          EP-A- 0 433 986
EP-A- 0 433 990          DE-A- 4 130 429
GB-A- 2 055 388          GB-A- 2 184 128

Remarks:
The file contains technical information submitted after the application was filed and not included in this specification

**Description**

The present invention relates to polypropylene-b-poly(ethylene-co-propylene) and polyethylene-b-poly(ethylene-co-propylene) block copolymers, to a process for the production thereof and to an olefin material which comprises such block copolymers.

Polyolefins such as polypropylene and polyethylene are produced and consumed on a large scale since they are inexpensive and have excellent processability and other physical properties such as mechanical strength, heat resistance, chemical resistance and electrical insulation. However polypropylene, for example has poor impact strength whilst having relatively good stiffness. This disadvantage is improved by blending with it an amorphous poly(ethylene-co-propylene) that has good impact strength. However, in conventional block type copolymers the matrix comprising polypropylene and the domain comprising poly(ethylene-co-propylene) are separated, which causes a lowering of the physical properties. Consequently it has been desired to overcome these problems in the art.

Conventionally, one type of known block copolymer is composed of a polypropylene and poly(ethylene-co-propylene). The conventional block type copolymer is produced by a two-step process comprising, for example, the synthesis of a polypropylene for 30 minutes to several hours in a first polymerization vessel, followed by the synthesis of a poly(ethylene-co-propylene) for 30 minutes to several hours in a second polymerization vessel. In view of the period of time required to form one polymer chain, chemical bonds between the polypropylene and the poly(ethylene-co-propylene) are not formed in conventional block type copolymers. Rather the block copolymers exist in a micro-blend state; a true block copolymer as defined in polymer chemistry is not formed, so the desired characteristics as targeted have not always been achieved.

In view of this problem, the present inventors have studied how to achieve a novel true block copolymer that is a true block copolymer having a polypropylene or a polyethylene chemically bonded with a poly(ethylene-co-propylene) and that has been hitherto unavailable. As a result, the present inventor has noted that an olefin polymerization reaction using a transition metal catalyst normally completes within one second for one polymer chain. He has thus found that a true block copolymer can be obtained by conducting a polymerization in a short time period using a special method.

Accordingly, the present invention provides an olefin block copolymer which comprises a polymer of a first olefin which is ethylene or propylene, and a copolymer of ethylene and propylene, wherein the said polymer is chemically bonded to the said copolymer.

The invention further provides a process for producing an olefin block copolymer, which process comprises (a) polymerising a first olefin, which is ethylene or propylene, in the presence of a catalyst for a period of 0.01 to 10 seconds to give a reaction product comprising a polymer of the first olefin and unreacted first olefin; and (b) polymerising a second olefin, which is ethylene or propylene and which is different from the first olefin, in the presence of a catalyst and the reaction product of step (a), for a period of 0.01 to 10 seconds such that a copolymer of the first and second olefins is produced and chemical bonds are formed between the said copolymer and the said polymer of the first olefin.

The invention further provides an olefin block copolymer which comprises a polymer of a first olefin which is ethylene or propylene, and a copolymer of ethylene and propylene, wherein the said polymer is chemically bonded to the said copolymer, the block copolymer being obtainable by a process of the invention as defined above.

Typically the catalyst used in step (a) and/or step (b) is a Ziegler catalyst, for instance comprising a titanium trihalide procatalyst and an aluminium alkyl cocatalyst. A metallocene catalyst, for instance a metallocene of Zr or Hf, is also preferred.

In one aspect of the invention, the process further comprises (c) producing a polymer of ethylene or propylene, or a copolymer of ethylene and propylene, and blending the said polymer or copolymer with the block copolymer obtained in step (b).

When the first olefin is ethylene, the second olefin is propylene. The block copolymer then comprises an ethylene polymer chemically bonded to a copolymer of ethylene and propylene. When the first olefin is propylene, the second olefin is ethylene. The block copolymer then comprises a propylene polymer chemically bonded to a copolymer of ethylene and propylene.

The present invention will be further described with reference to the accompanying drawings, wherein:

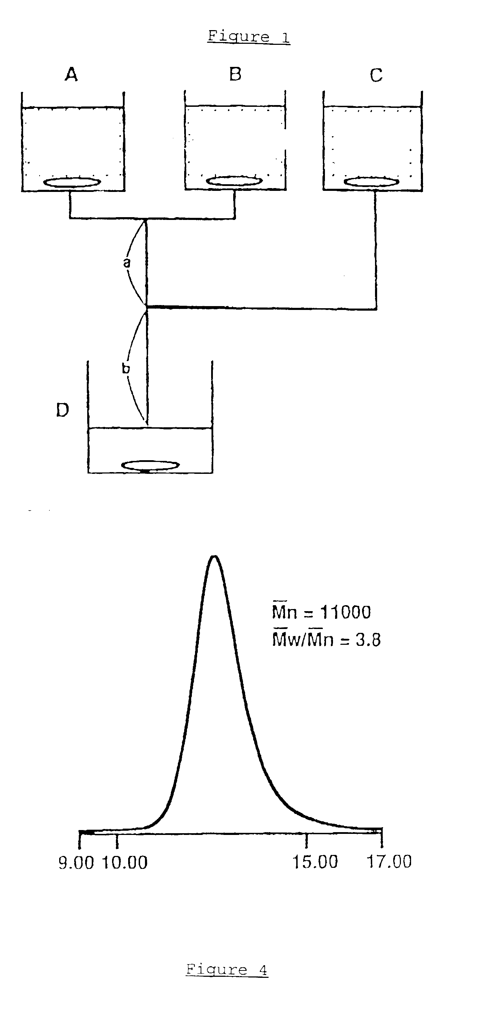

Fig. 1 is a schematic representation of a polymerisation process in which vessel A contains toluene, catalyst and propylene; vessel B contains toluene, co-catalyst and propylene; vessel C contains toluene and ethylene; vessel D contains ethanol; and a and b denote polymerization regions.

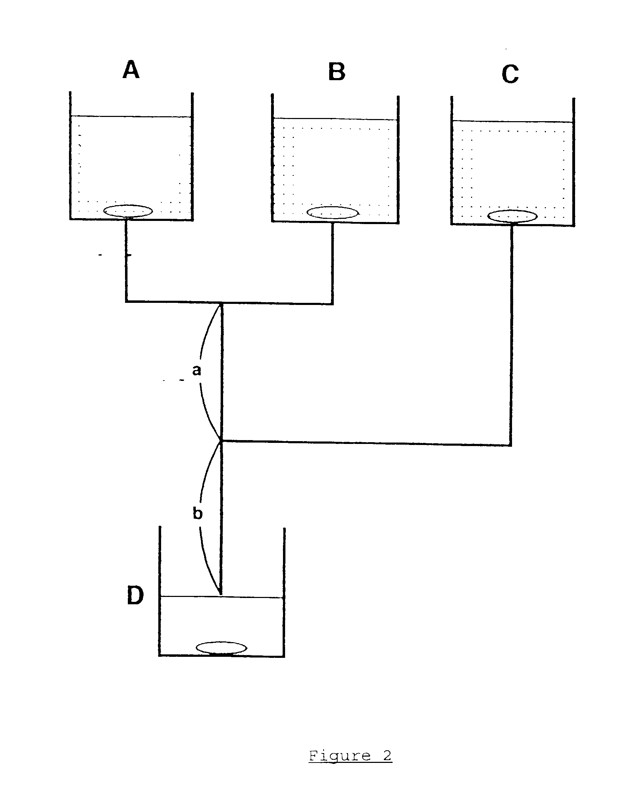

Fig. 2 is a schematic representation of a polymerisation process in which vessel A contains toluene, a metallocene catalyst, an alkylating agent and a cationic agent; vessel B contains toluene and propylene; vessel C contains toluene and ethylene; vessel D contains ethanol; and a and b denote polymerisation regions.

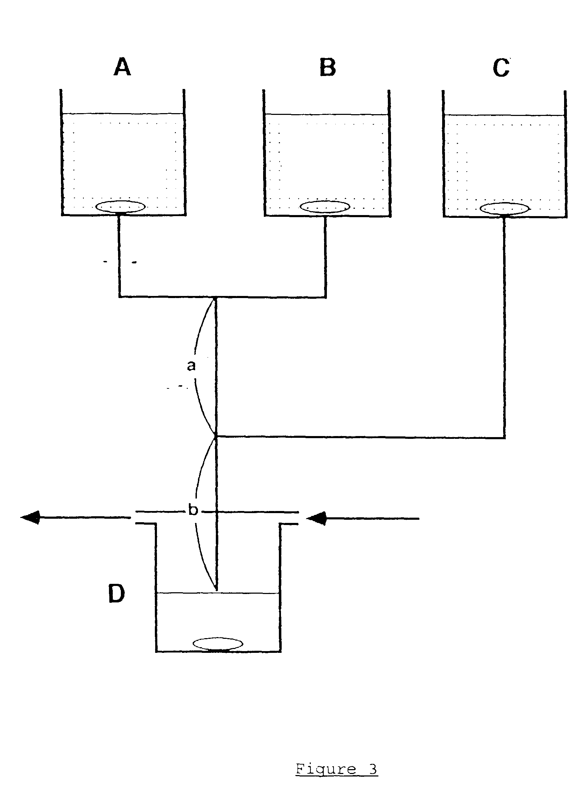

Fig. 3 is a schematic representation of a process in which vessel A contains toluene, catalyst and propylene; vessel B contains toluene, co-catalyst and propylene; vessel C contains toluene and ethylene; arrow E indicates entry of propylene, ethylene and/or a gas mixture of propylene and ethylene; arrow F indicates exit of exhaust gas; and a and b denote polymerisation regions; and

Fig.4 is a Gas Phase Chromatography (GPC) curve for the polypropylene-b-poly (ethylene-co-propylene) obtained in Example 1, in which the x axis represents the elution time.

According to the present invention, a polyethylene-b-poly(ethylene-co-propylene) or a poly-propylene-b-poly(ethylene-co-propylene) has excellent impact strength, and exhibits, in addition, useful characteristics as a compatibilizer for a crystalline polyolefin and an amorphous polyolefin.

The present invention therefore further provides an olefin material which comprises an olefin block copolymer of the invention as defined above blended with a polymer of ethylene or propylene, a copolymer of ethylene and propylene or a mixture thereof.

In the case of a polypropylene, high isotacticity is preferred, however, the invention is not limited to the use of a polypropylene having high isotacticity. When a block copolymer according to the present invention is synthesized, polypropylene, a polyethylene or a poly(ethylene-co-propylene) can coexist by controlling the polymerization process and condition.

In the process of the invention, using a catalyst such as titanium tetrachloride supported on magnesium chloride in combination with a cocatalyst such as triethylaluminium, or a metallocene compound of hafnium or zirconium in combination with methylaluminoxan or a boron compound, polypropylene or polyethylene is synthesized at first in a small tube for a period of 0.01 to 10 seconds and subsequently a poly(ethylene-co-propylene) is synthesized continuously in nearly the same period of time. In the process, the length of the block chains may be varied by altering the respective time periods. A repeat of these steps twice or more is also possible; thus step (a) or step (b) of the process may be repeated. Furthermore, the polymerization periods in the repeat step may be made longer, for instance from 1 minute to 2 hours.

As for the catalyst, various catalysts can be used, other than the titanium tetrachloride supported on magnesium chloride mentioned above, including titanium trichloride catalysts and metallocene catalysts. In addition, these catalysts may be treated initially with cocatalyst such as an alkylaluminium, an activating agent such as methylaluminoxan, or an agent for making cationic bonds such as a boron compound. Electron donor compounds such as aromatic esters and silicon compounds may also be coexistent.

As for the cocatalyst used in the present invention, various alkylaluminiums, alkylaluminium halides, and alkylaluminium hydrides may be used. Examples of the alkylaluminium include trialkylaluminium such as triethylaluminium and triisobutylaluminium; examples of the alkylaluminium halide include diethylaluminium chloride and ethylaluminium sesquichloride; and examples of the alkylaluminium hydride include diethylaluminium hydride and diisobutylaluminium hydride.

The polymerization temperature is not limited. However, it is normally in the range of 0°C to 200°C.

The solvent used is normally toluene, xylene, hexane or heptane is used.

Now, examples of the polymerization process according to the present invention will be described in more detail with reference to the accompanying drawings.

Fig. 1 illustrates a polymerization process of an olefinic copolymer in which the polypropylene and poly(ethylene-co-propylene) are chemically bonded.

In Fig. 1, a toluene slurry of a catalyst is contained in vessel A, and a toluene solution of triethylaluminum is contained in vessel B; propylene is dissolved in both vessels. In vessel C, ethylene-saturated toluene is contained. Liquids in respective vessels flow out from Teflon tubes fitted to the down parts. At a first step, the effluents from vessels A and B are joined to synthesize a polypropylene. Symbol "a" indicates the polymerization region. The flow out of polymerization region "a" contains unreacted propylene and the catalyst in addition to the polypropylene; therewith the toluene solution of ethylene from vessel C joins, and a poly(ethylene-co-propylene) is produced in polymerization region "b" at end of the polypropylene.

Subsequently, the flow is introduced into vessel C that contains ethanol, and the catalyst is deactivated. Thereby, a polypropylene-b-poly(ethylene-co-propylene) results. Composition of the product polymer can be controlled by adjusting the length of polymerization regions "a" and "b" and the amount of propylene in vessels A and B and of ethylene in vessel C.

Fig. 2 is almost the same as Fig. 1 ; a metallocene catalyst, an alkylating agent, and an agent for making cation are solved in vessel A, propylene-saturated toluene is contained in vessel B. and ethylene-saturated toluene is contained in vessel C. Liquids in respective vessels flow out from Teflon tubes fitted to the down parts. The reactions in polymerization region "a" and "b" are same as in Fig. 1; a desired block copolymer was obtained in the same way as in Fig. 1.

In Fig. 3 similarly to Fig. 1, a toluene slurry of a catalyst is contained in vessel A, and a toluene solution of an cocatalyst is contained in vessel B; propylene is dissolved in both vessels. In vessel C, toluene in which ethylene is dissolved is contained. After getting a polypropylene-b-poly(ethylene-co-propylene) silmilarly to the case of Fig. 1, propylene, ethylene, or a mixed gas of propylene and ethylene are, individually or successively if required, introduced into vessel D to polymerize. Thereby, these monomers polymerize to produce a polyolefin material. Thus, the polyolefin material was obtained in which the polypropylene-b-poly(ethylene-co-propylene) polymerized preliminarily was mixed with a polypropylene and/or a polyethylene and/or a poly(ethylene-co-propylene).

Examples 1 to 3 and Comparative Example

A polypropylene-b-poly(ethylene-co-propylene) was prepared using the apparatus of Fig. 1.

One hundred millilitres of a toluene slurry containing 1.3 g of a catalyst was accommodated in vessel A, in which propylene was dissolved to a concentration of 0.68 mol/l. The catalyst used was prepared as follows.

Magnesium chloride and ethyl benzoate were coground in a vibrating mill for 30 hours, then treated with titanium tetrachloride at 90°C for 2 hours; thereafter, the product was washed with heptane which was finally replaced with toluene.

In vessel B, 100 ml of a toluene solution of 70 mmol/l triethylaluminum was charged and propylene was dissolved to a concentration of 0.68 mol/l. In vessel C, 100 ml of a toluene solution with a 0.2 mol/l ethylene content was accommodated.

Table 1 shows the time of polymerization in reaction regions "a" and "b", as depicted in Figure 1, and the number average molecular weight and molecular weight distribution of the resultant polymers. The number average molecular weight and molecular weight distribution were determined by Gas Phase Chromatography (GPC). The values were estimated to polystyrene standards.

Table 1

| Synthesis of polypropylene-b-poly(ethylene-co-propylene). | | | | | |
|---|---|---|---|---|---|
| Example | Polymerization Time (seconds) | | $\overline{Mn}$ x $10^3$ | $\overline{Mw}/\overline{Mn}$ | Ethylene content |
| | region "a" | region "b" | | | mol % |
| 1 | 0.065 | 0.065 | 11 | 3.8 | |
| 2 | 0.060 | 0.120 | 15 | 3.6 | 25 |
| 3 | 0.130 | 0.130 | 20 | 3.3 | |

The GPC curve for the resultant polypropylene-b-poly(ethylene-co-propylene) is given in Figure 4.

Next, the polypropylene-b-poly(ethylene-co-propylene) prepared in Example 2 and separately prepared 0.19 g of a polypropylene (polymerization period: 0.08 seconds) blended with 0.38 g of a poly(ethylene-co-propylene) (polymerization period: 0.13 seconds) (this blend is referred to as Comparative Example) were respectively charged into flasks, to each of which 50 ml of n-heptane was added. Stirring was applied under nitrogen atmosphere at room temperature (about 25°C) for 24 hours. Thereafter, each was subjected to centrifugal separation (3000 rpm, for 8 minutes), and supernatant was removed. This sequence of operations was repeated three times, then the extraction residues were dried at 60°C under vacuum for 2 hours; yields of the resultant polymers were measured. Table 2 shows the results.

Table 2

| Results of n-heptane extraction experiments | | |
|---|---|---|
| Sample | Weight before extraction (g) | Weight after extraction (g) |
| Example 2 | 0.57 | 0.52 |
| Comparative Example | 0.57 | 0.19 |

The sample from Example 2 retained most polymer, whereas the Comparative Example sample retained only polypropylene and the poly(ethylene-co-propylene) was extracted.

Example 4

A polypropylene-b-poly(ethylene-co-propylene) was prepared by using the apparatus of Fig. 2.

In vessel A, 100 ml of toluene solution was charged which contained a polymerization catalyst consisting of 0.26 g of dimethylsilylene bis(2,3,5-trimethylcyclopentadienyl)zirconium dichloride, 18 mmol of triisobutyl aluminum, and 0.66 mmol of N,N-dimethylanilinium tetra(pentafluorophenyl)borate, and the content was maintained for 2 minutes at 30°C with agitation. Propylene in vessel B and ethylene in vessel C were respectively dissolved in 100 ml of toluene under a pressure of 8 kgf/cm$^2$G. Thereafter, propylene in "a", and ethylene and propylene in "b" were respectively polymerized at 30°C for 0.5 seconds; 1.33 g of a polymer was obtained thereby.

Example 5

A Polyolefin material containing a polypropylene-b-poly(ethylene-co-propylene) was prepared by using the apparatus of Fig. 3.

One hundred milliliters of a toluene slurry containing 1 g of the same catalyst as used in Example 1 was charged, and propylene was solved to be 0.68 mol/l.

In vessel B, a toluene solution containing 14 mmol of triethylaluminum annd 0.7 mmol of cyclohexyl methyl dimethoxysilane was pressured by propylene to be 0.68 mol/l also. In vessel C, ethylene was dissolved into 100 ml of toluene to be 0.21 mol/l. As the first step, propylene was polymerized in polymerization region "a" at a temperature of 30°C for 0.1 seconds, and the synthesis of poly(ethylene-co-propylene) bonded with the propylene was made in "b" for 0.1 seconds. Then in vessel D, polypropylene was synthesized at 80°C for 10 minutes followed by poly(ethylene-co-propylene) for 15 minutes. Thereby, 42.6 g of an polyolefin material that contained 0.37 g of polypropylene-b-poly(ethylene-co-propylene) was obtained.

As explained hereinabove, the synthesis of a polyolefin block copolymer that has been impossible by conventional polymerization processes and technologies was successful according to the present invention. The characteristic of the novel block copolymer was different from the conventional block type copolymers due to the chemical bond of a polypropylene or a polyethylene with a poly(ethylene-co-propylene).The polymer is very useful as a new plastic and a compatibilizer for a crystalline polyolefin and an amorphous polyolefin.

## Claims

1. An olefin block copolymer which comprises a polymer of a first olefin which is ethylene or propylene, and a copolymer of ethylene and propylene, wherein the said polymer is chemically bonded to the said copolymer.

2. A block copolymer according to claim 1 which comprises a polypropylene chemically bonded to a poly(ethylene-co-propylene).

3. A block copolymer according to claim 1 which comprises a polyethylene chemically bonded to a poly(ethylene-co-propylene).

4. An olefin material which comprises an olefin block copolymer as defined in any one of claims 1 to 3 blended with a polymer of ethylene or propylene, a copolymer of ethylene and propylene, or a mixture thereof.

5. A process for producing an olefin block copolymer, which process comprises

(a) polymerising a first olefin, which is ethylene or propylene, in the presence of a catalyst for a period of 0.01 to 10 seconds to give a reaction product comprising a polymer of the first olefin and unreacted first olefin; and
(b) polymerising a second olefin, which is ethylene or propylene and which is different from the first olefin, in the presence of a catalyst and the reaction product of step (a), for a period of 0.01 to 10 seconds such that a copolymer of the first and second olefins is produced and chemical bonds are formed between the said copolymer and the said polymer of the first olefin.

6. A process according to claim 5 wherein a Ziegler catalyst is used as the polymerisation catalyst in step (a) or step (b).

7. A process according to claim 5 wherein a metallocene catalyst is used as the polymerisation catalyst in step (a) or step (b).

8. A process according to any one of claims 5 to 7 wherein step (a) or step (b) is repeated.

9. A process according to any one of claims 5 to 8 which further comprises
(c) producing a polymer of ethylene or propylene, or a copolymer of ethylene and propylene, and blending the said polymer or copolymer with the block copolymer obtained in step (b).

10. An olefin block copolymer which comprises a polymer of a first olefin which is ethylene or propylene, and a copolymer of ethylene and propylene, wherein the said polymer is chemically bonded to the said copolymer, the block copolymer being obtainable by a process as defined in any one of claims 5 to 8.

## EP 0 703 253 B1

**Patentansprüche**

1. Olefin-Blockcopolymer umfassend ein Polymer eines ersten Olefins, das Ethylen oder Propylen ist, und ein Copolymer von Ethylen und Propylen, wobei das Polymer chemisch an das Copolymer gebunden ist.

2. Blockcopolymer nach Anspruch 1, dadurch gekennzeichnet, daß es ein chemisch an Poly(ethylen-co-propylen) gebundenes Polypropylen umfaßt.

3. Blockcopolymer nach Anspruch 1, dadurch gekennzeichnet, daß es ein chemisch an Poly(ethylen-co-propylen) gebundenes Polyethylen umfaßt.

4. Olefinisches Material, das ein Olefin-Blockcopolymer nach einem der Ansprüche 1 bis 3, gemischt mit einem Polymer aus Ethylen oder Propylen, einem Copolymer aus Ethylen und Propylen, oder einer Mischung davon, umfaßt.

5. Verfahren zur Herstellung eines Olefin-Blockcopolymers, dadurch gekennzeichnet, daß es die Stufen umfaßt:

   (a) Polymerisieren eines ersten Olefins, das Ethylen oder Propylen ist, in Gegenwart eines Katalysators während eines Zeitraums von 0,01 bis 10 Sekunden unter Erhalt eines Reaktionsproduktes, das ein Polymer des ersten Olefins und unumgesetztes erstes Olefin umfaßt; und
   (b) Polymerisieren eines zweiten Olefins, das Ethylen oder Propylen ist, und vom ersten Olefin verschieden ist, in Gegenwart eines Katalysators und des Reaktionsproduktes von Stufe (a) während eines Zeitraums von 0,01 bis 10 Sekunden, wodurch ein Copolymer des ersten und zweiten Olefins gebildet wird, und zwischen dem Copolymer und dem Polymer des ersten Olefins chemische Bindungen ausgebildet werden.

6. Verfahren nach Anspruch 5, dadurch gekennzeichnet, daß als Polymerisationskatalysator in Stufe (a) oder Stufe (b) ein Ziegler-Katalysator verwendet wird.

7. Verfahren nach Anspruch 5, dadurch gekennzeichnet, daß als Polymerisationskatalysator in Stufe (a) oder Stufe (b) ein Metallocen-Katalysator verwendet wird.

8. Verfahren nach einem der Ansprüche 5 bis 7, dadurch gekennzeichnet, daß Stufe (a) oder Stufe (b) wiederholt wird.

9. Verfahren nach einem der Ansprüche 5 bis 8, dadurch gekennzeichnet, daß es außerdem umfaßt
   (c) das Herstellen eines Polymers aus Ethylen oder Propylen, oder eines Copolymers aus Ethylen und Propylen, und Mischen des Polymers oder Copolymers mit dem in Stufe (b) erhaltenen Blockcopolymer.

10. Olefin-Blockcopolymer umfassend ein Polymer eines ersten Olefins, das Ethylen oder Propylen ist, und ein Copolymer aus Ethylen und Propylen, wobei das erste Polymer chemisch an das Copolymer gebunden ist, und das Blockcopolymer nach einem Verfahren nach einem der Ansprüche 5 bis 8 erhältlich ist.

**Revendications**

1. Copolymère bloc oléfinique, qui comprend un polymère d'une première oléfine qui est l'éthylène ou le propylène et un copolymère d'éthylène et de propylène, dans lequel ledit polymère est chimiquement lié audit copolymère.

2. Copolymère bloc selon la revendication 1, qui comprend un polypropylène chimiquement lié à un poly(éthylène-co-propylène).

3. Copolymère bloc selon la revendication 1, qui comprend un polyéthylène chimiquement lié à un poly(éthylène-co-propylène).

4. Matériau oléfinique qui comprend un copolymère bloc oléfinique selon l'une des revendications 1 à 3, mélangé avec un polymère d'éthylène ou de propylène, un copolymère d'éthylène et de propylène, ou un mélange de ceux-ci.

5. Procédé pour produire un copolymère bloc oléfinique, lequel procédé comprend les étapes suivantes :

a) polymériser une première oléfine, qui est l'éthylène ou le propylène, en la présence d'un catalyseur pendant une période de 0,01 à 10 secondes pour donner un produit de réaction comprenant un polymère de la première oléfine et la première oléfine résiduelle n'ayant pas réagi ; et

b) polymériser une deuxième oléfine, qui est l'éthylène ou le propylène et qui est différente de la première oléfine, en la présence d'un catalyseur et du produit de réaction de l'étape (a) pendant une période de 0,01 à 10 secondes de telle sorte qu'on produit un copolymère des première et deuxième oléfines et que des liaisons chimiques sont formées entre ledit copolymère et ledit polymère de la première oléfine.

6. Procédé selon la revendication 5, dans lequel on utilise un catalyseur de Ziegler comme catalyseur de polymérisation dans l'étape (a) ou l'étape (b).

7. Procédé selon la revendication 5, dans lequel on utilise un catalyseur à base de métallocène comme catalyseur de polymérisation dans l'étape (a) ou l'étape (b).

8. Procédé selon l'une des revendications 5 à 7, dans lequel on répète l'étape (a) ou l'étape (b).

9. Procédé selon l'une des revendications 5 à 8, qui comprend en outre l'étape suivante :
c) produire un polymère d'éthylène ou de propylène, ou un copolymère d'éthylène et de propylène, et mélanger ledit polymère ou ledit copolymère avec le copolymère bloc obtenu dans l'étape (b).

10. Copolymère bloc oléfinique, qui comprend un polymère d'une première oléfine qui est l'éthylène ou le propylène, et un copolymère d'éthylène et de propylène, dans lequel ledit polymère est chimiquement lié audit copolymère, le copolymère bloc pouvant être obtenu par un procédé selon l'une quelconque des revendications 5 à 8.

Figure 1

A    B    C

a

b

D

$\overline{M}n = 11000$
$\overline{M}w/\overline{M}n = 3.8$

9.00 10.00    15.00  17.00

Figure 4

8

<u>Figure 2</u>

A           B           C

a

b

D

Figure 3